# EUROPÄISCHE PATENTANMELDUNG

(11) **EP 2 071 854 A2**
(43) Veröffentlichungstag der Anmeldung: **17.06.2009**
(21) Anmeldenummer: 08020048.8
(22) Anmeldetag: 18.11.2008
(51) Int. Cl.: H04Q 1/14

(54) **Verteilereinrichtung einer Telekommunikationsanlage**

(30) Priorität: 14.12.2007 DE 202007017623 U
(71) Anmelder: CCS Technology Inc., Wilmington, DE 19803 (US)
(72) Erfinder: Matthies, Jürgen, Dipl.-Ing., 58300 Wetter (Ruhr) (DE); Breuer-Heckel, Mike, Dipl.-Ing., 44143 Dortmund (DE); Badura, Stefan, Dipl.-Ing., 58708 Menden (DE); Hoffmann, Wolfgang, Dr.-Ing., 58097 Hagen (DE)
(74) Vertreter: Sturm, Christoph

(57) **Zusammenfassung**

Die Erfindung betrifft eine Verteilereinrichtung einer Telekommunikationsanlage, mit mehreren übereinander bzw. nebeneinander angeordneten Verteilerleisten, die Funktionselemente für den Anschluss signalführender Adern eines Telekommunikationskabels aufweisen, und mit zwischen übereinander bzw. nebeneinander angeordneten Verteilerleisten positionierten Drahtführungselementen (10), die Drahtführungskanäle (11, 12) bildenden, wobei die signalführenden Adern eines Telekommunikationskabels zusammen mit nicht signalführenden, teilnehmerspezifischen Schirmungselementen, insbesondere Schirmungsadern, des Telekommunikationskabels über die Drahtführungskanäle (11, 12) einer Vorderseite der Verteilereinrichtung, an der vorzugsweise als IDC-Kontake ausgebildete Anschlusselemente der Funktionselemente angeordnet sind, zuführbar sind. Erfindungsgemäß ist mindestens einem Drahtführungselement (10) jeweils mindestens ein elektrisch leitendes, insbesondere plattenförmiges Element (16) zugeordnet, wobei dem oder jedem Element (16) des jeweiligen Drahtführungselements (10) an der Vorderseite (13) der Verteilereinrichtung Anschlusselemente (17) für die elektrisch leitende Kontaktierung der nicht signalführenden Schirmungselemente des Telekommunikationskabels zugeordnet sind.

## Beschreibung

Die Erfindung betrifft eine Verteilereinrichtung einer Telekommunikationsanlage gemäß dem Oberbegriff des Anspruchs 1. Des Weiteren betrifft die Erfindung ein Drahtführungselement für eine Verteilereinrichtung einer Telekommunikationsanlage nach dem Oberbegriff des Anspruchs 8.

Aus dem Produktkatalog "Anschluss- und Verteilersysteme, Ausgabe 1, Seiten 17 bis 23, Jahr 2000, Corning Cable Systems GmbH & Co. KG" ist eine als Verteilerblock ausgebildete Verteilereinrichtung einer Telekommunikationsanlage bekannt. Der auf Seiten 17 bis 21 dieses Produktkatalogs offenbarte Verteilerblock verfügt über mehrere Verteilerleisten, die sandwichartig übereinander in einer Aufnahmewanne angeordnet sind. Die Verteilerleisten umfassen Funktionselemente für den Anschluss signalführender Adern eines Telekommunikationskabels, wobei diese signalführenden Adern auch als α-Adern und b-Adern bezeichnet werden. Über Drahtführungskanäle umfassende Drahtführungselemente können die signalführenden Adern des Telekommunikationskabels den Funktionselementen zugeführt werden, um an denselben angeschlossen zu werden. Die Funktionselemente umfassen hierzu sogenannte α-Anschlüsse sowie b-Anschlüsse für die signalführenden a-Adern und b-Adern der Telekommunikationskabel.

Sollen über Telekommunikationskabel Signale in hohen Datenübertragungsraten übertragen werden, so weisen dieselben neben den signalführenden Adern auch nicht-signalführende Schirmungsadern auf, wobei die Schirmungsadern auch als s-Adern bezeichnet werden.

So zeigen Seiten 22 und 23 des oben genannten Produktionskatalogs einen Verteilerblock, dessen Funktionselemente neben α-Anschlüssen und b-Anschlüssen auch s-Anschlüsse umfassen, an welche die s-Adern eines Telekommunikationskabels angeschlossen werden können.

Dann, wenn die Funktionselemente einer Verteilerleiste neben α-Anschlüssen und b-Anschlüssen für die Kontaktierung der α-Adern und b-Adern auch s-Anschlüsse für die Kontaktierung der s-Adern aufweisen, können bei unveränderter Anzahl der Anschlüsse weniger signalführende Kabeladern eines Telekommunikationskabels angeschlossen werden als in dem Fall, in welchem die Funktionselemente der Verteilerleiste ausschließlich a-Anschfüsse und b-Anschlüsse für den Anschluss von a-Adern und b-Adern aufweisen. Hierdurch vergrößert sich der Platzbedarf einer Verteilereinrichtung. Dies ist von Nachteil.

Hiervon ausgehend liegt der vorliegenden Erfindung das Problem zu Grunde, eine neuartige Verteilereinrichtung einer Telekommunikationsanlage sowie ein neuartiges Drahtführungselement für eine Verteilereinrichtung einer Telekommunikationsanlage zu schaffen.

Dieses Problem wird dadurch gelöst, dass die eingangs genannte Verteilereinrichtung durch die Merkmale des kennzeichnenden Teils des Anspruchs 1 weitergebildet ist.

Erfindungemäß ist mindestens einem Drahtführungselement jeweils mindestens ein elektrisch leitendes, insbesondere plattenförmiges Element zugeordnet, wobei dem oder jedem Element des jeweiligen Drahtführungselements an der Vorderseite der Verteilereinrichtung Anschlusselemente für die elektrisch leitende Kontaktierung der nicht signalführenden Schirmungselemente des Telekommunikationskabels zugeordnet sind.

Bei der erfindungsgemäßen Verteilerleiste werden die insbesondere als Schirmungsadern ausgebildeten, nicht-signalführenden und teilnehmerspezifischen Schirmungselemente eines Telekommunikationskabels, die als s-Adern bezeichnet werden, an den elektrisch leitenden, insbesondere plattenförmigen Elementen der Drahtführungselemente elektrisch leitend kontaktiert. Die Funktionselemente der Verteilerleiste verfügen demnach ausschließlich über a-Anschlüsse und b-Anschlüsse für die signalführenden Kabeladern, also die a-Adern und b-Adern des Telekommunikationskabels. Bedingt dadurch, dass die Schirmungsadern an die elektrisch leitenden, insbesondere plattenförmigen Elemente der Drahtführungselemente angeschlossen werden, verringert sich der Platzbedarf der Verteilereinrichtung erheblich.

Das erfindungsgemäße Drahtführungselement ist in Anspruch 8 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: ein erfindungsgemäßes Drahtführungselement für eine erfindungsgemäße Verteilereinrichtung einer Telekommunikationsanlage nach einem ersten Ausführungsbeispiel in perspektivischer Vorderansicht,
- Fig. 2:: ein erfindungsgemäßes Drahtführungselement für eine erfindungsgemäße Verteilereinrichtung einer Telekommunikationsanlage nach einem zweiten Ausführungsbeispiel in perspektivischer Vorderansicht,
- Fig. 3:: ein erfindungsgemäßes Drahtführungselement für eine erfindungsgemäße Verteilereinrichtung einer Telekommunikationsanlage nach einem dritten Ausführungsbeispiel in perspektivischer Vorderansicht,
- Fig. 4:: ein erfindungsgemäßes Drahtführungselement für eine erfindungsgemäße Verteilereinrichtung einer Telekommunikationsanlage nach einem vierten Ausführungsbeispiel in perspektivischer Vorderansicht, und
- Fig. 5:: ein erfindungsgemäßes Drahtführungselement für eine erfindungsgemäße Verteilereinrichtung einer Telekommunikationsanlage nach einem fünften Ausführungsbeispiel in perspektivischer Vorderansicht.

Die hier vorliegende Erfindung betrifft eine Verteilereinrichtung einer Telekommunikationsanlage, die vorzugsweise als Hauptverteilerblock ausgeführt ist.

Ein solcher Verteilerblock verfügt über eine typischerweise metallische Aufnahmewanne, in der sandwichartig übereinander bzw. nebeneinander mehrere Verteilerleisten angeordnet sind. Zwischen jeweils zwei übereinander bzw. nebeneinander angeordneten Verteilerleisten ist jeweils mindestens ein Drahtführungselement angeordnet.

Die Verteilerleisten umfassen Funktionselemente für den Anschluss signalführender Adern eines Telekommunikationskabels, wobei die Anschlusselemente vorzugsweise als IDC-Kontakte ausgeführt sind. Die Drahtführungselemente umfassen Drahtführungskanäle, über welche die signalführenden Adern eines Telekommunikationskabels zusammen mit nicht signalführenden, teilnehmerspezifischen Schirmungselementen des Telekommunikationskabels einer Vorderseite der Verteilereinrichtung zuführbar sind, wobei an der Vorderseite der Verteilereinrichtung die als IDC-Kontakte ausgebildeten Anschlusselemente der Funktionselemente der Verteilerleisten ausgebildet sind.

Bei den nicht signalführenden, teilnehmerspezifischen Schirmungselementen des Telekommunikationskabels handelt es sich insbesondere um Schirmungsadern. Alternativ kann es sich hierbei auch um Schirmungsfolien oder Schirmungsgeflechte handeln.

Nachfolgend sei davon ausgegangen, dass es sich bei den signalführenden, teilnehmerspezifischen Schirmungselementen um Schirmungsadern handelt.

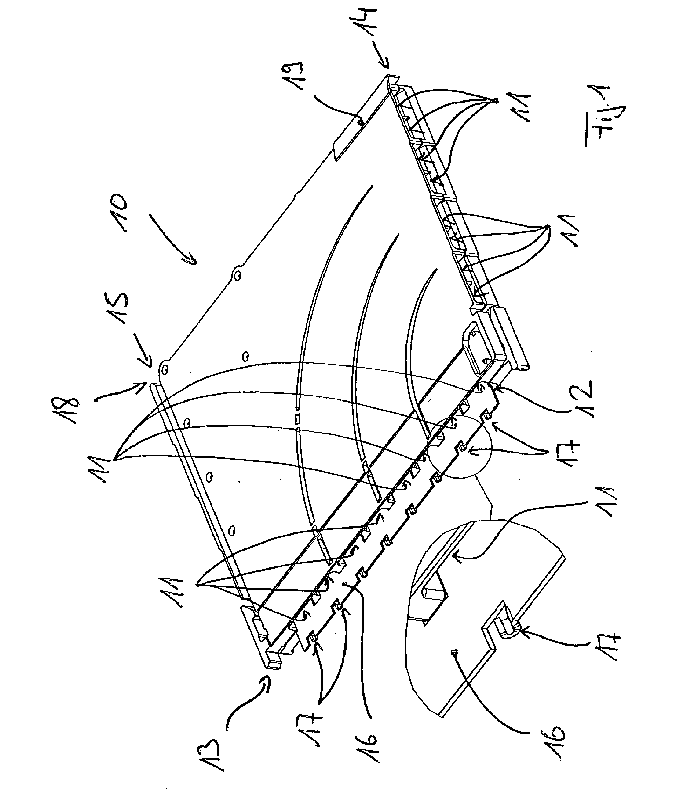

Die Besonderheiten der erfindungsgemäßen Verteilereinrichtung betreffend die Drahtführungselemente derselben, wobei Fig. 1 bis 5 unterschiedliche Ausführungsbeispiele von Drahtführungselementen für erfindungsgemäße Verteilereinrichtungen zeigen.

So zeigt Fig. 1 ein Drahtführungselement 10 für eine erfindungsgemäße Verteilereinrichtung einer Telekommunikationsanlage, wobei das Drahtführungselement 10 mehrere Drahtführungskanäle 11 bzw. 12 umfasst, die allesamt an einer Vorderseite 13 des Drahtführungselements 10 münden.

Von der Vorderseite 13 aus gesehen, verlaufen erste Drahtführungskanäle 11 zu einer ersten Seite 14 des Drahtführungselements 10 und zweite Drahtführungskanäle 12 verlaufen ausgehend von der Vorderseite 13 zu einer der ersten Seite 14 gegenüberliegenden zweiten Seite 15 des Drahtführungselements 10.

Gemäß Fig. 1 ist dem Drahtführungselement 10 ein elektrisch leitendes, insbesondere plattenförmiges Element 16 zugeordnet, welches gemäß Fig. 1 zwischen den zu unterschiedlichen Seiten 14 bzw. 15 verlaufenden Drahtführungskanälen 11 bzw. 12 positioniert ist. So sind gemäß Fig. 1 die zur ersten Seite 14 verlaufenden Drahtführungskanäle 11 oberhalb des Elements 16 und die zur zweiten Seite 15 verlaufenden Drahtführungskanäle 12 unterhalb des Elements 16 angeordnet.

Wie bereits ausgeführt, sind über die Drahtführungskanäle 11, 12 die signalführenden Adern und die nicht signalführenden Schirmungsadern eines Telekommunikationskabels in Richtung auf die Vorderseite 13 eines Drahtführungselements 10 und damit die Vorderseite einer Verteilereinrichtung führbar, wobei an der Vorderseite der Verteilereinrichtung auch die Anschlusselemente der Funktionselemente bzw. Verteilerleisten positioniert sind, an welche die signalführenden Adern des Telekommunikationskabels anzuschließen sind.

Im Sinne der hier vorliegenden Erfindung ist das elektrisch leitende, insbesondere plattenförmige Element 16 jedes Drahtführungselements 10 an der Vorderseite 13 derart ausgebildet, dass die nicht-signalführenden Schirmungsadern des Telekommunikationskabels elektrisch leitend mit dem Element 16 kontaktiert werden können. Das Element 16 des Drahtführungselements 10 der Fig. 1 bildet an der Vorderseite 13 des Drahtführungselements 10 und damit der Verteilereinrichtung Anschlusselemente 17 für die elektrisch leitende Kontaktierung der nicht-signalführenden Schirmungsadern des Telekommunikationskabels aus.

Die nicht-signalführenden Schirmungsadern eines Telekommunikationskabels werden demnach nicht an Anschlusselemente von Funktionselementen einer Verteilerleiste angeschlossen, sondern vielmehr an das Element 16 eines Drahtführungselements 10. An einer Rückseite 18 des Drahtführungselements 10 ist das Element 16 unter Ausbildung einer Lasche 19 umgebogen, wobei die Lasche 19 der elektrisch leitenden Kontaktierung des Elements 16 mit der metallischen Aufnahmewanne der als Verteilerblock ausgebildeten Verteilereinrichtung dient.

Im Ausführungsbeispiel der Fig. 1 sind die Anschlusselemente 17 des elektrisch leitenden, insbesondere plattenförmigen Elements 16 des Drahtführungselements 10 als Kontaktlaschen ausgebildet, die insbesondere durch Ausstanzungen und Verformungen im Element 16 ausgebildet sind. In diesem Fall ist das Element 16 als metallisches Element ausgebildet.

Zur Kontaktierung einer nicht-signalführenden Schirmungsader mit einem solchen als Kontaktlasche ausgebildeten Anschlusselements 17 des Elements 16 des Drahtführungselements 10 wird die nicht-signalführende Schirmungsader mit einer metallischen, sogenannten Aderendhülse verpresst, die dann in die Kontaktlasche eingezogen werden kann.

Alternativ ist es auch möglich, dass elektrisch leitende, insbesondere plattenförmige, Element 16 des Drahtführungselements 10 als metallisiertes Element ausgebildet ist, welches durch Kunststoffspritzgießen und anschließendes metallisches Beschichten ausgebildet ist. Ebenso ist es möglich, dass elektrisch leitende, insbesondere plattenförmige, Element 16 des Drahtführungselements 10 als elektrisch leitendes Kunstoffelement ausgebildet ist, welches durch Kunststoffspritzgießen eines elektrisch leitenden Kunststoffs ausgebildet ist.

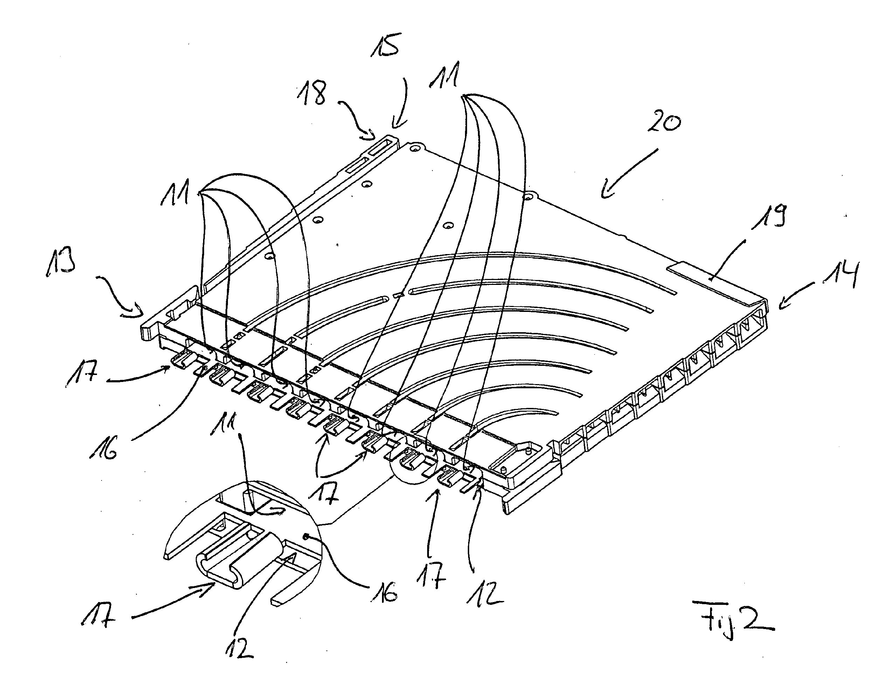

Ein zweites Ausführungsbeispiel eines erfindungsgemäßen Drahtführungselements 20 für eine erfindungsgemäße Verteilereinrichtung zeigt Fig. 2, wobei zur Vermeidung unnötiger Wiederholungen für das Ausführungsbeispiel der Fig. 2 gleiche Bezugsziffern verwendet werden wie im Ausführungsbeispiel der Fig. 1 und nachfolgend nur auf solche Details eingegangen wird, durch die sich das Ausführungsbeispiel der Fig. 2 von dem der Fig. 1 unterscheidet.

So unterscheidet sich das Ausführungsbeispiel der Fig. 2 vom Ausführungsbeispiel der Fig. 1 lediglich durch die konkrete Ausführung der an der Vorderseite 13 des Drahtführungselements 20 ausgebildeten Anschlusselemente 17 des Elements 16, die der elektrisch leitenden Kontaktierung der nicht-signalführenden Schirmungsadern des Telekommunikationskabels dienen. Auch im Ausführungsbeispiel der Fig. 2 sind die Anschlusselemente 17 als Kontaktlaschen ausgebildet.

Im Ausführungsbeispiel der Fig. 1 sind die Kontaktlaschen 17 im Querschnitt kreisrund und in Fig. 2 im Querschnitt oval ausgeführt.

In beiden Fällen verjüngt sich eine Innenkontur der als Kontaktlaschen ausgebildeten Anschlusselemente 17 in Richtung auf die Einführbereiche der Drahtführungskanäle 11 bzw. 12 an der Vorderseite des jeweiligen Drahtführungselements, sodass bei Einziehen einer mit einer Aderendhülse verpressten Schirmungsader die jeweilige Aderendhülse mit der Kontaktlasche verklemmt.

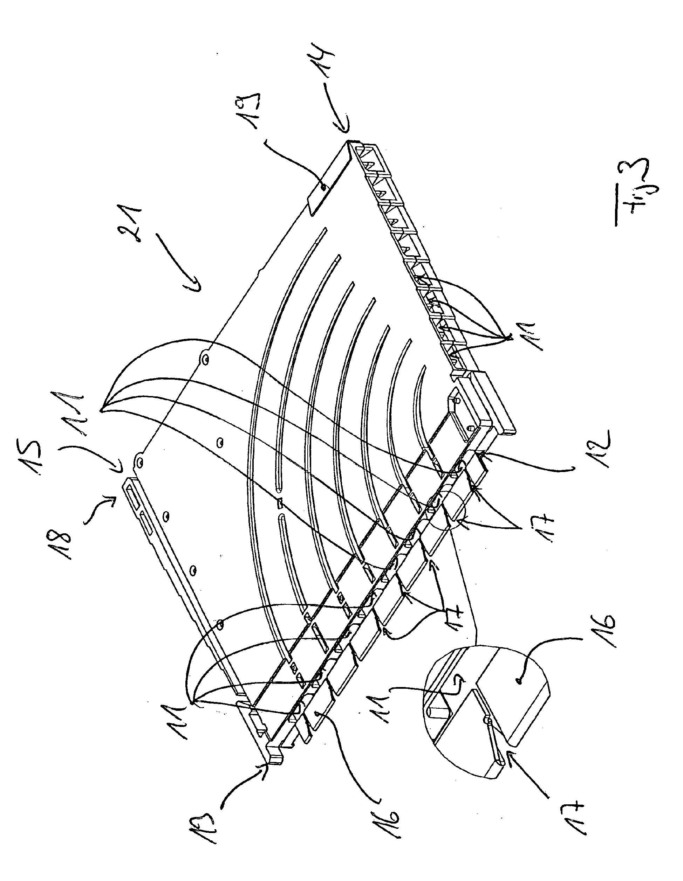

Ein weiteres Ausführungsbeispiel eines erfindungsgemäßen Drahtführungselements 21 für eine erfindungsgemäße Verteilerleiste zeigt Fig. 3, wobei auch für das Ausführungsbeispiel der Fig. 3 zur Vermeidung unnötiger Wiederholungen für gleiche Baugruppen gleiche Bezugsziffern verwendet werden wie in den Ausführungsbeispielen der Fig. 1 und 2.

Im Ausführungsbeispiel der Fig. 3 weist das Element 16 an der Vorderseite 13 wiederum Anschlusselemente 17 für die nicht-signalführenden Schirmungsadern des Telekommunikationskabels auf, wobei im Ausführungsbeispiel der Fig. 3 die Anschlusselemente 17 dadurch bereitgestellt sind, dass in das Element 16 an der Vorderseite 13 desselben Ausstanzungen eingebracht sind und durch Ausstanzungen voneinander begrenzte Abschnitte umgebogen sind. In die hierdurch ausgebildeten Anschlusselemente 17 können nicht-signalführende Schirmungsadern des Telekommunikationskabels unter Bereitstellung eines elektrisch leitenden Kontakts mit dem Element 16 eingefädelt werden.

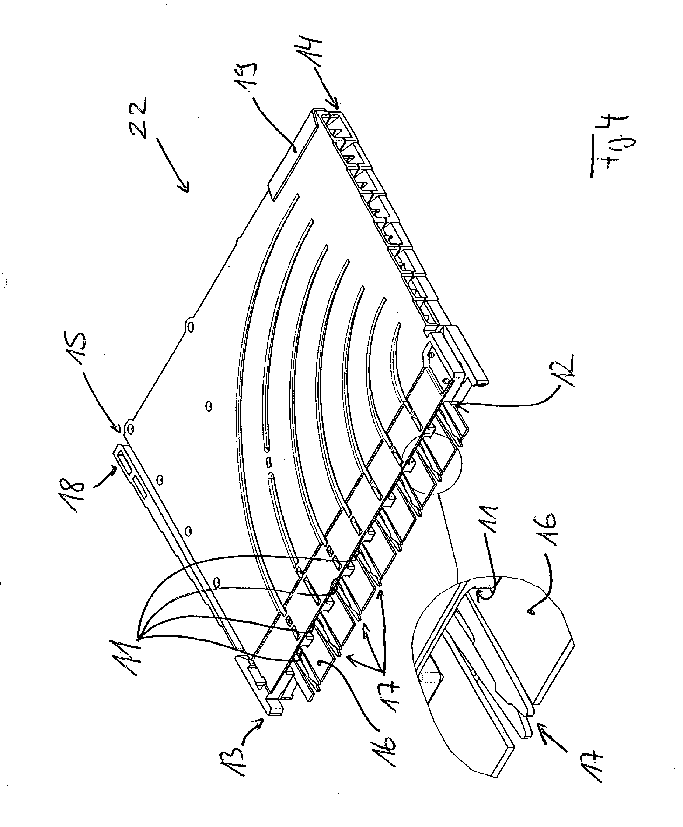

Fig. 4 zeigt eine Variante eines erfindungsgemäßen Drahtführungselements 22, bei welchem die an der Vorderseite 13 des Drahtführungselements 22 ausgebildeten Anschlusselemente 17 des Elements 16 die Kontur von IDC-Kontakten aufweisen.

In den gezeigten Ausführungsbeispielen der Fig. 1 bis 4 sind die Anschlusselemente 17 unmittelbar in das Element 16 eingebracht.

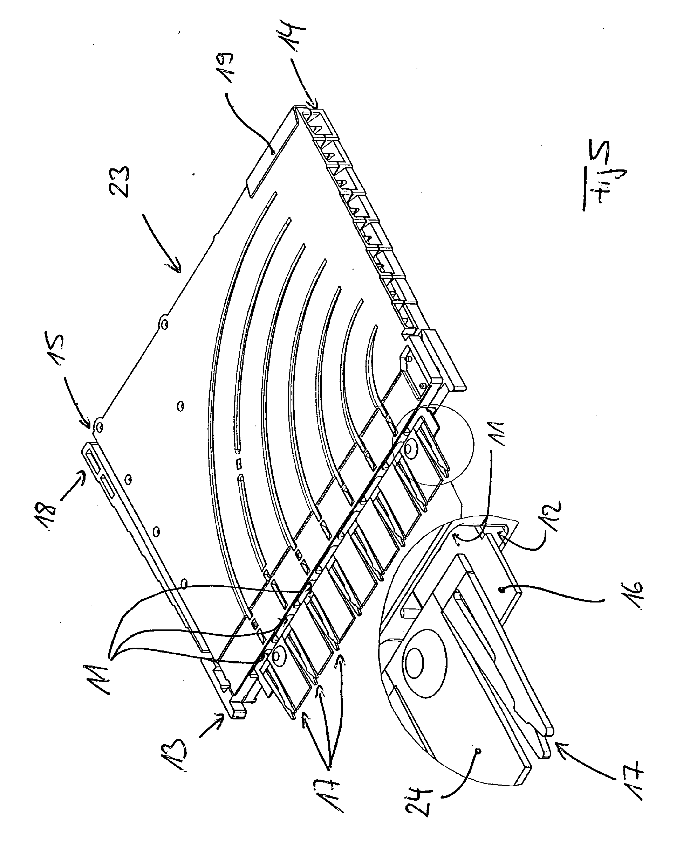

Im Unterschied hierzu ist es gemäß Fig. 5 auch möglich, dass ein separates Element 24, welches die Anschlusselemente 17 aufweist, mit dem sich zwischen den Drahtführungskanälen 11, 12 erstreckenden Element 16 z. B. durch Vernieten im Bereich der Vorderseite 13 des jeweiligen Drahtführungselements verbunden ist.

### Bezugszeichenliste

- 10: Drahtführungselement
- 11: Drahtführungskanal
- 12: Drahtführungskanal
- 13: Vorderseite
- 14: Seite
- 15: Seite
- 16: Element
- 17: Anschlusselement
- 18: Rückseite
- 19: Lasche
- 20: Drahtführungselement
- 21: Drahtführungselement
- 22: Drahtführungselement
- 23: Drahtführungselement
- 24: Element

## Patentansprüche

1. Verteilereinrichtung einer Telekommunikationsanlage, mit mehreren übereinander bzw. nebeneinander angeordneten Verteilerleisten, die Funktionselemente für den Anschluss signalführender Adern eines Telekommunikationskabels aufweisen, und mit zwischen übereinander bzw. nebeneinander angeordneten Verteilerleisten positionierten Drahtführungselementen, die Drahtführungskanäle bildenden, wobei die signalführenden Adern eines Telekommunikationskabels zusammen mit nicht signalführenden, teilnehmerspezifischen Schirmungselementen, insbesondere Schirmungsadern, des Telekommunikationskabels über die Drahtführungskanäle einer Vorderseite der Verteilereinrichtung, an der vorzugsweise als IDC-Kontake ausgebildete Anschlusselemente der Funktionselemente angeordnet sind, zuführbar sind, **dadurch gekennzeichnet, dass** mindestens einem Drahtführungselement (10; 20; 21; 22) jeweils mindestens ein elektrisch leitendes, insbesondere plattenförmiges Element (16) zugeordnet ist, wobei dem oder jedem Element (16) des jeweiligen Drahtführungselements (10; 20; 21; 22) an der Vorderseite (13) der Verteilereinrichtung Anschlusselemente (17) für die elektrisch leitende Kontaktierung der nicht signalführenden Schirmungselemente des Telekommunikationskabels zugeordnet sind.

2. Verteilereinrichtung nach Anspruch 1, **dadurch gekennzeichnet, dass** die Anschlusselemente (17) des Elements (16) des jeweiligen Drahtführungselements (10; 20; 21; 22) als IDC-Kontakte ausgebildet sind.

3. Verteilereinrichtung nach Anspruch 1, **dadurch gekennzeichnet, dass** die Anschlusselemente (17) des Elements (16) des jeweiligen Drahtführungselements (10; 20; 21; 22) als Kontaktlaschen ausgebildet sind.

4. Verteilereinrichtung nach einem der Ansprüche 1 bis 3, **dadurch gekennzeichnet, dass** oberhalb des Elements (16) des jeweiligen Drahtführungselements (10; 20; 21; 22) positionierte Drahtführungskanäle (11) von der Vorderseite zu einer ersten Seite und unterhalb des Elements (16) des jeweiligen Drahtführungselements (10; 20; 21; 22) positionierte Drahtführungskanäle (12) von der Vorderseite zu einer zweiten, der ersten Seite gegenüberliegenden Seite der Verteilereinrichtung verlaufen.

5. Verteilereinrichtung nach einem der Ansprüche 1 bis 4, **dadurch gekennzeichnet, dass** das Element (16) als metallisches Element ausgebildet ist, wobei die Anschlusselemente (17) durch Ausstanzungen und Verformungen desselben ausgebildet sind.

6. Verteilereinrichtung nach einem der Ansprüche 1 bis 4, **dadurch gekennzeichnet, dass** das Element (16) als metallisiertes Element ausgebildet ist, welches durch Kunststoffspritzgießen und anschließendes metallisches Beschichten ausgebildet ist.

7. Verteilereinrichtung nach einem der Ansprüche 1 bis 4, **dadurch gekennzeichnet, dass** das Element (16) als elektrisch leitendes Kunstoffelement ausgebildet ist, welches durch Kunststoffspritzgießen eines elektrisch leitenden Kunststoffs ausgebildet ist.

8. Drahtführungselement für eine Verteilereinrichtung einer Telekommunikationsanlage, mit mehreren Drahtführungskanälen, wobei signalführende Adern eines Telekommunikationskabels zusammen mit nicht signalführenden, teilnehmerspezifischen Schirmungselementen, insbesondere Schirmungsadern, des Telekommunikationskabels über die Drahtführungskanäle einer Vorderseite einer Verteilereinrichtung, an der vorzugsweise als IDC-Kontake ausgebildete Anschlusselemente angeordnet sind, zuführbar sind, **gekennzeichnet durch** mindestens ein elektrisch leitendes, insbesondere plattenförmiges Element (16), wobei dem oder jedem Element (16) an der Vorderseite (13) Anschlusselemente (17) für die elektrisch leitende Kontaktierung der nicht signalführenden Schirmungselemente des Telekommunikationskabels zugeordnet sind.

9. Drahtführungselement nach Anspruch 8, **gekennzeichnet durch** Merkmale nach einem oder mehreren der Anspruche 2 bis 7.
